# EUROPEAN PATENT SPECIFICATION

(11) **EP 0 716 177 B1**
(45) Date of publication and mention of the grant of the patent: **13.01.1999**
(21) Application number: 95308863.0
(22) Date of filing: 06.12.1995
(51) Int. Cl.: D06F 37/22

(54) **A laundry tub of a drum type washing machine**
Wäschetrommel einer Waschmaschine
Tambour à linge d'une machine à laver

(30) Priority: 07.12.1994 KR 9433409 U
(43) Date of publication of application: 12.06.1996
(73) Proprietor: Samsung Electronics Co., Ltd., Suwon-city, Kyungki-do 441-370 (KR)
(72) Inventor: Cho, Sung Won, Suwon-city, Suwon City, Kyungki-Do (KR)
(74) Representative: Neill, Alastair William

(56) References cited:
- EP-A- 0 421 442
- DE-A- 2 746 989

## Description

The invention relates to a laundry tub of a drum washing machine, and in particular, to providing a laundry tub of a conical shape including a fluid balancer.

Prior art drum washing machines are used to wash or dehydrate laundry or clothes in a manner that a laundry tub coupled to a horizontal rotating shaft pulls laundry up and then drops it down by centripetal force. This means that laundry is gathered at the random places on which its weight is exerted, resulting in an unbalanced state of the laundry tub. So, a stress concentration occurs on the horizontal rotating shaft following by the addition of fatigue thereto. Further, the unbalanced state prevailing during the dehydrating causes the rotating shaft to be subject to overload, thereby producing vibration. In order to solve these problems, there has been developed a balancer surrounding the washing machine.

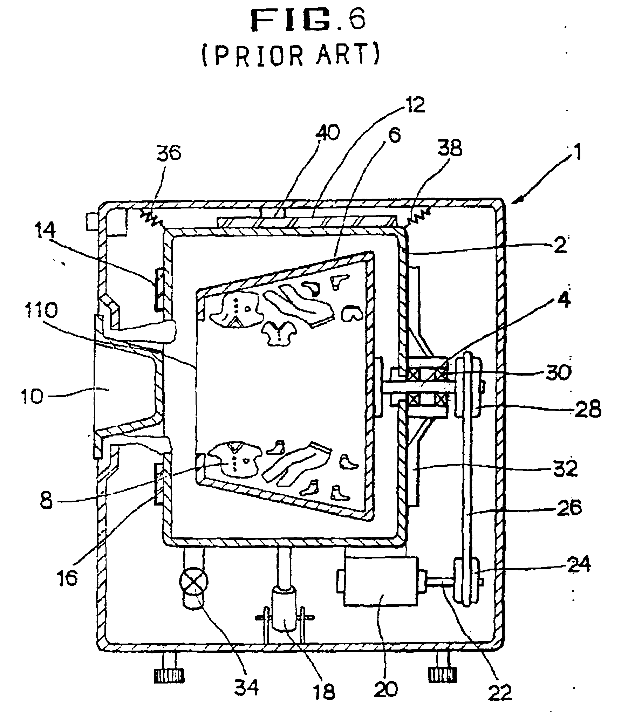

Referring to Figure 6, a conventional drum washing machine is shown, provided with a balancer, which comprises an outer tub 2 supported in a housing 1 and a laundry tub 6 fixed at one end of a horizontal rotating shaft 4 which is mounted on the rear portion of the outer tub 2, in which the laundry tub 6 is formed so that a rear portion coupled to the horizontal rotating shaft 4 has a diameter larger than a front portion adjacent to an opening 110. The laundry tub 6 can be used in washing, dehydrating and rinsing operations, and is thus adaptable to a full automatic washing machine.

The housing 1 includes a door 10 openably and closedly mounted on the front portion to throw in and remove laundry items 8. The outer tub 2 stores washing water supplied by means of a feeding device (not shown) in a space containing the drum washing tub 6. Also, weight balancers 12, 14 and 16 are respectively disposed on the upper and front surfaces of the outer tub 2. A shock absorber 18 is mounted on the housing 1 to support the outer tub 2. A motor 20 is attached on the bottom surface of the outer tub 2 to rotate the laundry tub 6 at the different speeds required for the washing operation and the dehydrating operation. The motor 20 includes a rotating shaft 22 to one end of which a pulley 24 is fixed. The horizontal rotating shaft 4 includes a pulley 28 mounted at the one end of the shaft to be rotated by means of a belt 26 connected to the pulley 24. The horizontal rotating shaft 4 also is supported on a bearing structure 30 for ease of rotation. A supporting member 32 is mounted on the rear portion of the outer tub 2 to support the horizontal rotating shaft 4. A drain device 34 is mounted on the bottom surface of the outer tub 2 to discharge water according to the opening/closing control of a controller (not shown). Spring members 36 and 38 are suspended between the upper surface of the outer tub 2 and the housing 1, and a shock absorbing supporter 40 is mounted on the inner portion of the housing 1 to keep a suitable clearance between the housing 1 and the outer tub 2. Thus, the outer tub 2 is elastically supported in the housing 1 by means of springs 38 and 39 and the shock absorber 18.

But, the drum washing machine uses a solid balancer including a heavier mass, so that it can not actively act against the changing of a load. Also, overload happens due to the centrifugal force during the high speed rotation of the laundry tub and is transferred to the supporting member for the horizontal rotating shaft. At that time, it causes the horizontal rotating shaft to be stressed, resulting in inducing vibration of the washing machine while generating noise. Furthermore, it deteriorates the endurance of the washing machine.

In order to resolve these problems and disadvantages, there is a typical drum washing machine adapting a fluid balancer disclosed in European Patent No. 0390343A2. The washing machine has a problem in that the vibration occurs at a lower speed rotation encountered during the washing and rinsing operations, resulting in a larger load to a driving motor. Further, during the dehydrating operation, a resonance band is formed in a predetermined range of the high speed rotation thereby increasing the vibration of the laundry tub.

DE 27 46 989 discloses a washing machine having a fluid balancer, in which the fluid balancer is shaped to achieve a compact configuration of the fluid balancer and a tub of the washing machine.

Accordingly, an object of the invention is to provide a drum washing machine including a fluid balancer to minimize the occurrence of vibrations not only in the lower speed mode but also in the high speed mode.

Another object of the invention is to provide a drum washing machine including a fluid balancer for responding quickly to the vibrations of each rotation mode.

In order to accomplish these objects, a drum washing machine according to the invention comprises a housing; an outer tub suspended in the housing; a laundry tub movably mounted on a transverse axis in the housing and including a plurality of dehydrating holes; means for feeding washing water to the outer tub and the laundry tub; means for discharging water out of the housing; a driving means for transferring driving force to the transverse shaft of the laundry tub; and a fluid balancer mounted remotely from the transverse shaft on the outer periphery of the laundry tub; a fluid absorbent being placed in the fluid balancer
characterised in that the fluid balancer has a height which is highest adjacent to an opening in the laundry tub and lowest at a place remote from said opening.

Preferably, the laundry tub has a structure such that one portion for mounting the fluid balancer has a diameter larger than other portion for fixing the transverse shaft.

The fluid absorbents are arranged in a plurality of discontinuous circle shapes in the center to the horizontal rotating shaft.

By way of example, specific embodiments of the invention will now be described, with reference to the accompanying drawings, in which :
Figure 1 is a schematic cross-sectional view showing a drum washing machine including a fluid balancer according to the invention;
Figure 2 is an exploded perspective view showing the balancer and laundry tub of Figure 1;
Figure 3 is a part cross-sectional view showing the mounting of the fluid balancer;
Figure 4 is a view showing another embodiment of a fluid balancer including a plurality of partition walls formed therein;
Figure 5 is a schematic cross-sectional view showing a drum washing machine provided with another embodiment of a laundry tub; and
Figure 6 is a schematic cross-sectional view showing the drum washing machine of the prior art.

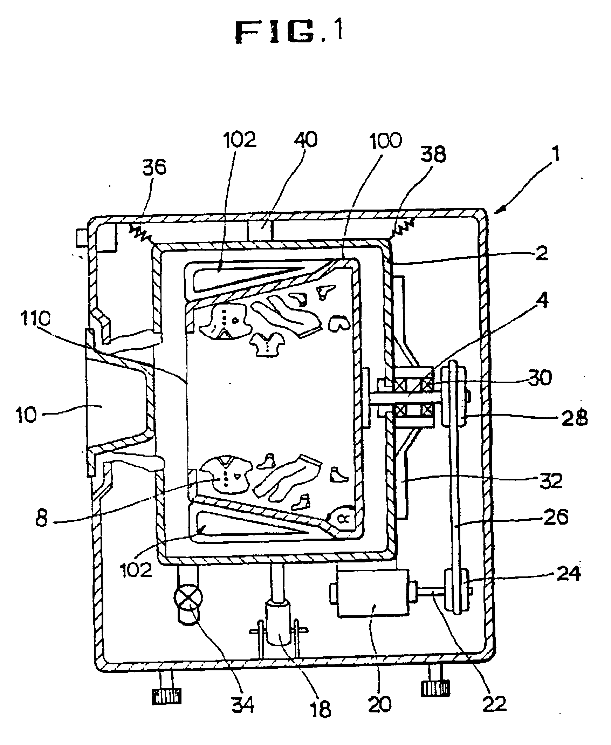

Referring to Figure 1, the same numbers are referenced to the same elements of Figure 6, the detailed explanation of which is omitted for the purpose of avoiding the repetition of the explanation. Only the novel parts will be described in detail.

A laundry tub 100 is designed to have a conical structure that is attached to a horizontal rotating shaft 4, in which the laundry tub 100 includes a rear portion having a diameter larger than a front portion adjacent to an opening 110. It prevents laundry items 8 from being gathered near the opening 110 in the drum or laundry tub 100. Thus, it is preferable that an angle oc formed between the rear and side portions is 80°.

A fluid balancer 102 is configured in a corresponding shape to surround the outer periphery of the laundry tub 100 from the front portion to a predetermined distance, which is coupled in a snap method or an integral structure with the laundry tub 100. The fluid balancer 102 is formed as a reverse-righted triangle in transverse cross-section, the height of which is highest adjacent to the opening 110, while the height is lowest at the place spaced far away from the opening 110 or adjacent to the horizontal rotating shaft 4. This reduces the centrifugal force of a biased weight of the tub, when the laundry is closely contacted to the inner surface to induce vibrations in a maximum magnitude adjacent to the opening 110 during the high speed rotation (the dehydrating operation) of the laundry tub 100.

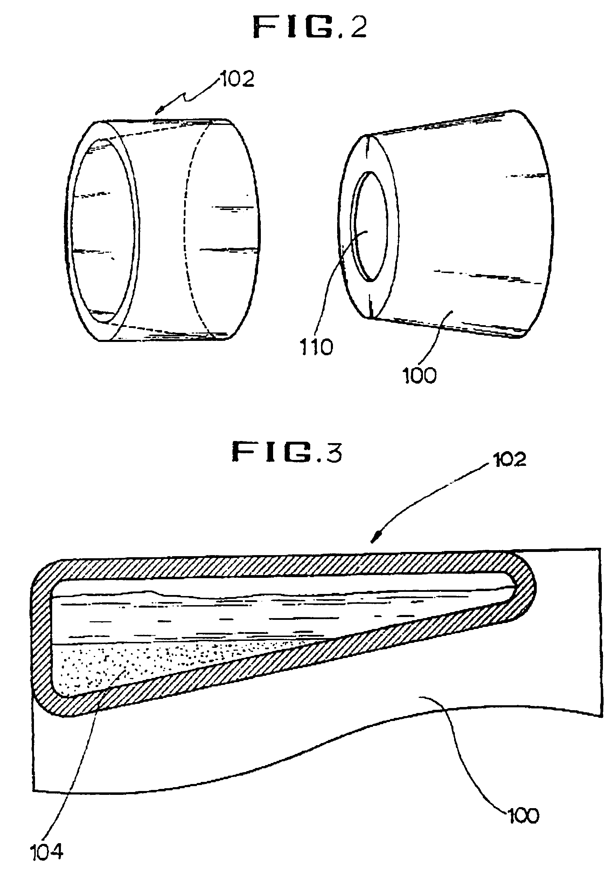

On the other hand, as shown in Figure 3, a fluid absorbing member 104 is disposed in the fluid balancer 102. Preferably, the absorbing member 104 is a sponge for easily absorbing water, but may be any material having a good absorbing property. The absorbing member 104 is disposed in a larger amount adjacent to the opening 110 or the highest height portion. It can offset the larger magnitude of vibration induced near the free end or the opening 110 of the laundry tub 110. The absorbing member 104 is integrally configured as an annular ring, around the center to the horizontal rotating shaft 4, with a predetermined radius.

The drum washing machine enables the laundry tub to be operated as follows : when the laundry tub 100 is non-operated, the fluid balancer 102 is stalled to keep fluid at the lowest portion thereof.

As the horizontal rotating shaft 4 is rotated at low speed, the laundry tub 100 is rotated at a lower speed along with the fluid balancer 102. At that time, the fluid absorbing member 104 is moved outward with the absorbed fluid to a first area which is the lowest portion of the fluid balancer 102. Next, a second area following the first area also absorbs fluid and moves up toward the highest portion of the fluid balancer 102. Therefore, the fluid absorbing member 104 passes through fluid to absorb the equivalent amounts. It enables the laundry tub 100 to be maintained at the uniform weight state throughout the full lengthwise thereof, thereby accomplishing the equivalent balance of the laundry tub to be rotated in a stable state.

During the dehydrating operation, as the horizontal rotating shaft 4 is is rotated at high speed, the laundry tub 100 also is rotated at high speed. At that time, fluid contained in the absorbing member 104 is drawn out by the centrifugal force and then collected toward the utmost inner periphery of the fluid balancer 102. In other words, the fluid balancer 102 is subject to the force applied toward the direction spaced far away from the outer wall of the laundry tub 100. Thus it can resolve the phenomena to force laundries to be biased toward one place during the rotation of the laundry tub at the high speed, because fluid is collected at the place contrary to that of the laundry 8.

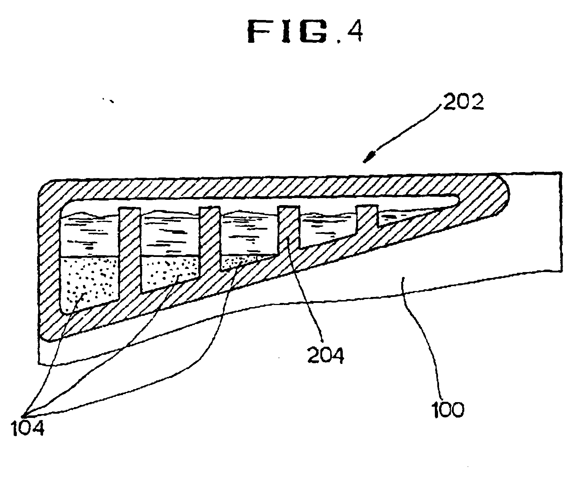

Referring to Figure 4 illustrating another embodiment of the invention, a fluid balancer 202 is mounted on the outer periphery of the laundry tub 100. A plurality of partition walls 204 are longitudinally extended from the bottom surface of the fluid balancer 202 to have the same level of fluid, which are spaced away in a predetermined interval from one another. At the first operation, the fluid balancer 202 is acted in the same manner as that of Figure 3, but the more the rotation speed of the fluid balancer 202 is, the more fluid is flowed over and collected in turns from the lowest partition wall adjacent to the horizontal rotating shaft 4 toward the highest partition adjacent to the opening 110. According to this embodiment, the operation of the fluid balancer 202 is similar to that of a fluid balancer 102 in the first embodiment.

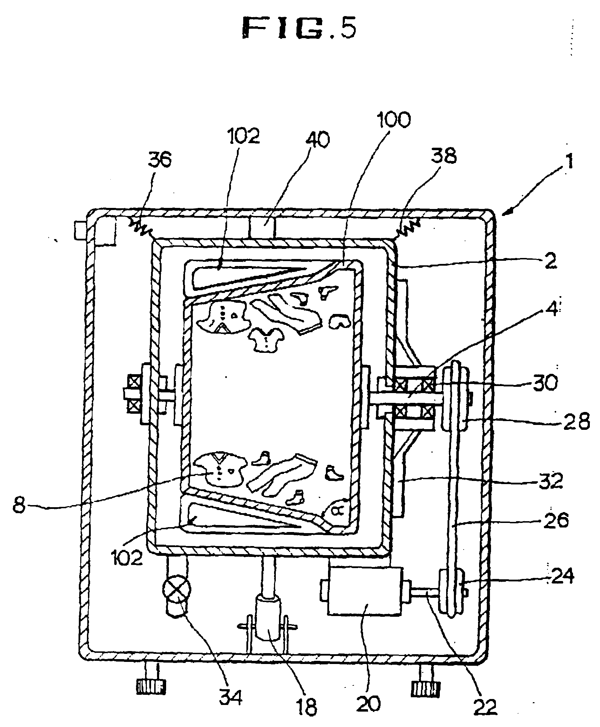

As described above, a drum washing machine is a washing machine of a front loading type for throwing in and drawing out laundry through the side wall of an outer tub, but it is adaptable to a washing machine of a top loading type for throwing in and drawing out laundry through the upper portion of an outer tub as shown in Figure 5.

As is apparent from the above explanation, the invention comprises a fluid balancer of a reverse righted triangle mounted around the outer periphery of a laundry tub in a manner that its highest portion is arranged adjacent to the opening thereof. The fluid balancer acts against the vibrations generated during the rotation of a laundry tub to prevent the unbalance of a load.

Also, during the initial or low speed operation, an annular fluid absorbent uniformly contains fluid in itself to maintain the uniform weight throughout the full lengthwise of a laundry tub, thereby leading to the stable rotation of the laundry tub.

During the high speed operation, fluid contained in the absorbent is drawn out/moved toward the place far away from the outer wall of the laundry tub in proportion to the rotation speed, so that the unbalance relatively varied by its weight can be reduced.

## Claims

1. A drum washing machine comprising:
a housing (1);
an outer tub (2) suspended in the housing (1);
a laundry tub (100) movably mounted on a transverse axis in the housing (1) and including a plurality of dehydrating holes;
means for feeding washing water to the outer tub (2) and the laundry tub (100);
means (34) for discharging water out of the housing; a driving means for transferring driving force to the transverse shaft (4) of the laundry tub (100); and
one fluid balancer (102) which is mounted remotely from the transverse shaft (4) on the outer periphery of the laundry tub (100); a fluid absorbing member (104) being placed in the fluid balancer (102);
characterised in that the fluid balancer (102) has a height which is highest adjacent to an opening (110) in the laundry tub (100) and lowest at a place spaced for away from said opening (110).

2. A drum washing machine as claimed in Claim 1, in which:
the laundry tub (100) has a structure such that one portion for mounting the fluid balancer (102) has a diameter larger than other portion for fixing the transverse shaft (4).

3. The drum washing machine as claimed in Claim 2, in which:
a fluid absorbing member (104) is disposed in a larger amount in the place remote from the transverse shaft (4).

4. The drum washing machine as claimed in Claim 2, in which:
the fluid balancer (102) includes a plurality of partition walls (204) longitudinally extended from the bottom surface thereof to be communicated with one another.

5. The drum washing machine as claimed in Claim 1, in which:
the fluid absorbing member (104) is integrally arranged in an annular shape in the fluid balancer (102) centering to the horizontal rotating shaft (4).

6. The drum washing machine as claimed in Claim 1, in which:
the fluid absorbing member absorbent (104) is integrally configured as a plurality of annular rings centred on the horizontal shaft (4).

## Patentansprüche

1. Trommelwaschmaschine, die umfaßt:
ein Gehäuse (1);
eine äußere Trommel (2), die in dem Gehäuse (1) aufgehängt ist;
eine Wäschetrommel (100), die beweglich auf einer Querachse in dem Gehäuse (1) angebracht ist und eine Vielzahl von Entwässerungsöffnungen enthält;
eine Einrichtung zur Zufuhr von Waschwasser zu der äußeren Trommel (2) und der Wäschetrommel (100);
eine Einrichtung (34) zum Ableiten von Wasser aus dem Gehäuse; eine Antriebseinrichtung, die Antriebskraft auf die Querwelle (4) der Wäschetrommel (100) überträgt; sowie
eine Fluid-Auswuchteinrichtung (102), die von der Querwelle (4) entfernt am Außenumfang der Wäschetrommel (100) angebracht ist; ein fluidabsorbierendes Element (104), das in der Fluid-Auswuchteinrichtung (102) angeordnet ist;
**dadurch gekennzeichnet,** daß die Fluid-Auswuchteinrichtung (102) eine Höhe hat, die an eine Öffnung (110) in der Wäschetrommel (100) angrenzend am größten ist und an einer von der Öffnung (110) weit beabstandeten Stelle am geringsten ist.

2. Trommelwaschmaschine nach Anspruch 1, wobei:
die Wäschetrommel (100) so aufgebaut ist, daß ein Abschnitt zum Anbringen der Fluid-Auswuchteinrichtung (102) einen größeren Durchmesser hat als ein anderer Abschnitt zum Befestigen der Querwelle (4).

3. Trommelwaschmaschine nach Anspruch 2, wobei ein fluidabsorbierendes Element (104) in einer größeren Menge an der von der Querwelle (4) entfernten Stelle angeordnet ist.

4. Trommelwaschmaschine nach Anspruch 2, wobei die Fluid-Auswuchteinrichtung (102) eine Vielzahl von Trennwänden (104) enthält, die sich in Längsrichtung von der Bodenfläche derselben aus erstrecken und miteinander in Verbindung stehen.

5. Trommelwaschmaschine nach Anspruch 1, wobei das fluidabsorbierende Element (104) integral in einer Ringform in der Fluid-Auswuchteinrichtung (102) angeordnet ist, die auf die horizontale Drehwelle (4) zentriert ist.

6. Trommelwaschmaschine nach Anspruch 1, wobei:
das fluidabsorbierende Element (104) integral als eine Vielzahl von Ringen ausgebildet ist, die auf der horizontalen Welle (4) zentriert sind.

## Revendications

1. Lave-linge à tambour, comprenant:
un châssis (1);
une cuve extérieure (2) suspendue dans le châssis (1);
une cuve à linge (100) montée de façon mobile sur un axe transversal à l'intérieur du châssis (1) et comprenant une pluralité de trous d'essorage;
un moyen d'alimentation de la cuve extérieure (2) et de la cuve à linge (100) en eau de lavage;
un moyen (34) d'évacuation de l'eau du châssis; un moyen moteur destiné à transmettre une force motrice à l'arbre transversal (4) de la cuve à linge (100); et
un équilibreur hydraulique (102) qui est monté loin de l'arbre transversal (4) sur la périphérie extérieure de la cuve à linge (100); un élément absorbant de liquide (104) étant placé dans l'équilibreur hydraulique (102);
caractérisé par le fait que l'équilibreur hydraulique (102) présente une hauteur qui est plus grande au voisinage d'un orifice (110) de la cuve à linge (100) et inférieure au niveau d'une position éloignée dudit orifice (110).

2. Lave-linge à tambour selon la revendication 1, dans lequel la cuve à linge (100) a une structure telle qu'une partie sur laquelle est monté l'équilibreur hydraulique (102) présente un diamètre plus petit qu'une autre partie à laquelle est fixé l'arbre transversal (4).

3. Lave-linge à tambour selon la revendication 2, dans lequel l'élément absorbant de liquide (104) est placé en plus grande quantité au niveau de la position éloignée de l'arbre transversal (4).

4. Lave-linge à tambour selon la revendication 2, dans lequel l'équilibreur hydraulique (102) comprend une pluralité de parois séparatrices (204) qui s'étendent longitudinalement sur la surface inférieure de celui-ci de façon à laisser une communication entre elles.

5. Lave-linge à tambour selon la revendication 1, dans lequel l'élément absorbant de liquide (104) est agencé monobloc dans l'équilibreur hydraulique (102) sous la forme d'un anneau centré sur l'arbre rotatif horizontal (4).

6. Lave-linge à tambour selon la revendication 1, dans lequel l'élément absorbant de liquide (104) est configuré monobloc sous la forme d'une pluralité de couronnes annulaires centrées sur l'arbre horizontal (4).
